(19) Europäisches Patentamt
European Patent Office
Office européen des brevets

(11) **EP 4 465 513 B1**

(12) **EUROPEAN PATENT SPECIFICATION**

(45) Date of publication and mention
of the grant of the patent:
**06.05.2026 Bulletin 2026/19**

(21) Application number: **23876483.1**

(22) Date of filing: **19.09.2023**

(51) International Patent Classification (IPC):
*H02M 1/12* (2006.01)      *H02M 7/5387* (2007.01)
*H01F 17/04* (2006.01)     *H01F 27/24* (2006.01)
*G01R 19/10* (2006.01)     *H01F 27/40* (2006.01)
*H01F 17/00* (2006.01)

(52) Cooperative Patent Classification (CPC):
**H02M 1/0064; H01F 17/04; H01F 27/24;
H01F 27/40; H01F 27/402; H01F 37/00;
H02M 1/0009;** H01F 2017/0093; H02M 7/487

(86) International application number:
**PCT/CN2023/119782**

(87) International publication number:
**WO 2024/078278 (18.04.2024 Gazette 2024/16)**

(54) **MAGNETIC INTEGRATED INDUCTOR AND INVERTER**

MAGNETISCHER INTEGRIERTER INDUKTOR UND WECHSELRICHTER

BOBINE D'INDUCTION INTÉGRÉE MAGNÉTIQUE ET ONDULEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **10.10.2022 CN 202211235724**

(43) Date of publication of application:
**20.11.2024 Bulletin 2024/47**

(73) Proprietor: **Shenzhen SOFARSOLAR Co., Ltd.
Shenzhen, Guangdong 518101 (CN)**

(72) Inventors:
 • **WANG, Tao
   Shenzhen, Guangdong 518101 (CN)**
 • **DONG, Kehong
   Shenzhen, Guangdong 518101 (CN)**
 • **HU, WenHao
   Shenzhen, Guangdong 518101 (CN)**
 • **YI, Degang
   Shenzhen, Guangdong 518101 (CN)**

(74) Representative: **Santarelli
Tour Trinity
1 bis Place de la Défense
92400 Courbevoie (FR)**

(56) References cited:
**CN-A- 105 024 571      CN-A- 107 196 547
CN-A- 108 648 899      CN-A- 115 313 822
CN-U- 204 188 695      US-A1- 2008 080 106
US-B2- 11 303 196**

## Description

## Technical Field

The present application relates to the technical field of power electronics, and in particular, relates to an inverter circuit.

## Background of the Invention

In the fields of photovoltaic power generation, electrochemical energy storage or the like, requirements for power of grid-connected inverters are increasing gradually, but the existing single-tube devices cannot meet the requirements of high power, so it is necessary to use power modules. However, the price of the power modules is high, which increases the system cost. Therefore, single-tube devices are usually used to build inverter bridge arms, and then multiple inverter bridge arms are connected in parallel for use. However, this will increase the number of inductors and current sensors, and thus increase the cost and complexity of the system.

US2008/080106 discloses an integrated DC link inductor and current sensor winding having a core that includes at least two primary legs and at least one secondary leg, two direct current (DC) link windings each wound around one of the two primary legs, and a common mode current sensor winding wound around the secondary leg. Resistors coupled to the common mode current sensor winding may damp the common mode current oscillations.

CN107196547 discloses a three-phase dual buck grid inverter which has double buck bridge arm composed of positive buck unit and negative buck unit, and each phase composed of two comparators output, positive and negative buck units and two driving signals.

CN204188695U discloses a High voltage unbalanced electric current detecting transformer has preset secondary winding and specific secondary winding that are electrically connected with low voltage end of alternate/direct current high voltage filter capacitor.

CN105024571 discloses a three-phase inverter circuit which has transformer whose primary winding is connected with alternating current output connection terminal, where secondary winding of transformer is connected with three-phase filter capacitor unit output end.

## Summary of the Invention

The technical problem mainly to be solved by embodiments of the present application is to provide a magnetic integrated inductor and an inverter, which can effectively reduce the current ripple, reduce the volume of the whole circuit and reduce the cost.

In order to solve the above technical problem, a technical solution adopted by an embodiment of the present application is to provide an inverter circuit according to claim 1.

Further embodiments are defined by the dependent claims.

The magnetic integrated inductor provided according to the embodiments of the present application can perform differential-mode current sampling while suppressing differential-mode current ripple and common-mode current ripple, thereby reducing the volume of the circuit and reducing the cost.

## Brief description of the Drawings

One or more embodiments are exemplarily described with reference to pictures in corresponding attached drawings, and these exemplary descriptions are not intended to limit the embodiments. In the attached drawings, elements with the same reference numerals represent the similar elements, and unless otherwise stated, the pictures in the attached drawings are not intended to limit the scale.

FIG. 1 is a schematic structural diagram of a three-phase bridge arm parallel inverter circuit.
FIG. 2 is a schematic structural diagram of a magnetic integrated inductor provided according to an embodiment of the present application.
FIG. 3 is a schematic structural diagram of an inverter provided according to an embodiment of the present application.
FIG. 4 is a schematic structural diagram when the magnetic integrated inductor provided according to the embodiment of the present application is in operation.
FIG. 5 is a schematic structural diagram of five kinds of structures of one bridge arm in the inverter.
FIG. 6 is a schematic structural diagram of another magnetic integrated inductor provided according to an embodiment of the present application.
FIG. 7 is a schematic structural diagram of yet another magnetic integrated inductor provided according to an embodiment of the present application.

## Detailed Description of Embodiments

In order to make objectives, technical solutions and advantages of the present application more clear, the present application will be further described in detail with reference to the attached drawings and embodiments. It shall be appreciated that the specific embodiments described herein are only used to explain the present application, and are not intended to limit the present application.

It shall be noted that, various features in the embodiment of the present application may be combined with each other if there is no conflict therebetween. In addition, although functional modules are divided in the schematic diagram of the device and the logical order is shown in the flowchart diagram, in some cases, the steps shown or described may be executed in a module division or order different from those in the schematic diagram of the device and the flowchart diagram.

Unless otherwise defined, all technical and scientific terms used in this specification have the same meaning as commonly understood by those skilled in the art to which the present application belongs. The terms used in the specification of the present application are only for the purpose of describing specific embodiments and are not intended to limit the present application. The term "and/or" as used in this specification includes any and all combinations of one or more related items listed.

With the development of large-scale photovoltaic power plants and energy storage systems, the power level of grid-connected inverters is gradually improved. However, the existing single-tube devices cannot meet the demand for high power. Therefore, the inverter circuit with parallel bridge arms is usually used to meet the demand for high power, but such a circuit will increase the number of inductors and current sensors, thereby increasing the cost and the volume of the circuit.

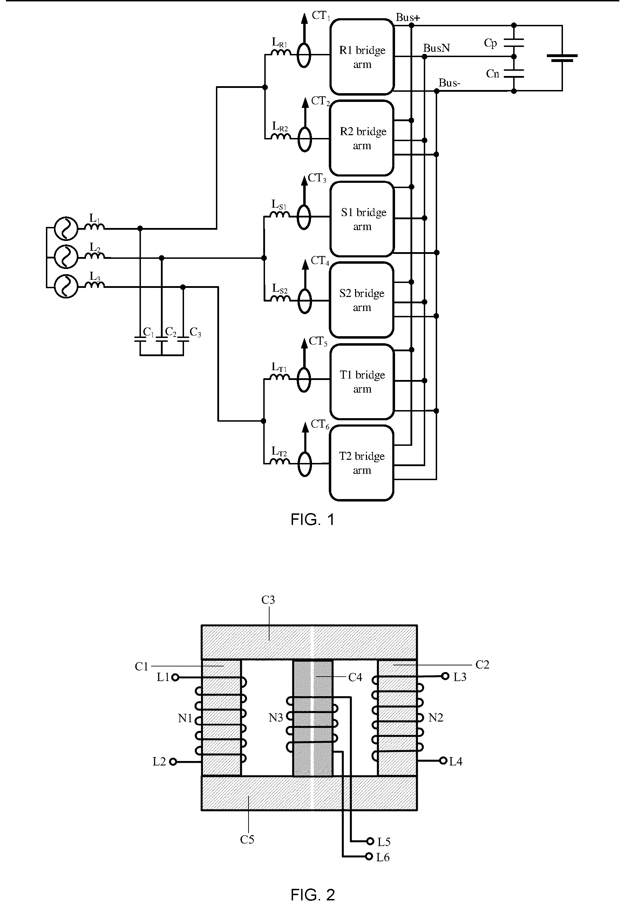

Referring to FIG. 1, there is shown a schematic structural diagram of a three-phase bridge arm parallel inverter circuit.

The three-phase bridge arm parallel inverter circuit comprises a bus capacitor module, a three-phase bridge arm module, a current sensor module, a filter inductor module and an output filter module.

The bus capacitor module is connected with a DC power supply, the bus capacitor module is further connected with an input terminal of the three-phase bridge arm module, an output terminal of the three-phase bridge arm module is respectively connected with the filter inductor module and the current sensor module, the filter inductor module is further connected with the output filter module, and the output filter module is used for outputting alternating current.

The bus capacitor module includes a capacitor Cp and a capacitor Cn. The three-phase bridge arm module comprises an R-phase bridge arm, an S-phase bridge arm and a T-phase bridge arm, wherein the R-phase bridge arm comprises an R1 bridge arm and an R2 bridge arm, the S-phase bridge arm comprises an S1 bridge arm and an S2 bridge arm, and the T-phase bridge arm comprises a T1 bridge arm and a T2 bridge arm. The current sensor module comprises a current sensor $CT_1$, a current sensor $CT_2$, a current sensor $CT_3$, a current sensor $CT_4$, a current sensor $CT_5$ and a current sensor $CT_6$. The filter inductor module comprises an inductor $L_{R1}$, an inductor $L_{R2}$, an inductor $L_{S1}$, an inductor $L_{S2}$, an inductor $L_{T1}$, and an inductor $L_{T2}$. The output filter module comprises an inductor $L_1$, an inductor $L_2$, an inductor $L_3$, a capacitor $C_1$, a capacitor $C_2$ and a capacitor $C_3$.

The inductor $L_{R1}$, the inductor $L_{R2}$, the inductor $L_{S1}$, the inductor $L_{S2}$, the inductor $L_{T1}$ and the inductor $L_{T2}$ are filter inductors at the output terminals of the respective bridge arms, which are used to suppress common-mode current ripple and differential-mode current ripple. The current sensor $CT_1$, the current sensor $CT_2$, the current sensor $CT_3$, the current sensor $CT_4$, the current sensor $CT_5$ and the current sensor $CT_6$ are current sensors at the output terminals of the respective bridge arms, which are used to measure the current of the respective bridge arms.

For the above three-phase bridge arm parallel inverter circuit, in order to reduce the cost and the volume of the circuit, reference is made to FIG. 2 which is the structural schematic diagram of a magnetic integrated inductor provided according to an embodiment of the present application.

As shown in FIG. 2, the magnetic integrated inductor comprises a first winding N1, a second winding N2, a third winding N3, a central column magnetic core C4, an upper magnetic core C3, a lower magnetic core C5, a left column magnetic core C1 and a right column magnetic core C2. The upper magnetic core C3 and the lower magnetic core C5 are symmetrically arranged up and down. The central column magnetic core C4, the left column magnetic core C1 and the right column magnetic core C2 are all vertically arranged with respect to the upper magnetic core C3 and the lower magnetic core C5. The first winding N1 is wound around the left column magnetic core C1, the second winding N2 is wound around the right column magnetic core C2, and the third winding N3 is wound around the central column magnetic core C4. An input terminal of the first winding N1 is connected to an inverter circuit, an input terminal of the second winding N2 is connected to an inverter circuit, and an output terminal of the first winding N1 is connected to an output terminal of the second winding N2. The first winding N1 and the second winding N2 have the same number of turns. The input terminal and the output terminal of the third winding N3 are respectively connected with a signal processing circuit.

In some embodiments, the tops of the central column magnetic core C4, the left column magnetic core C1 and the right column magnetic core C2 are all flush with the bottom of the upper magnetic core C3, and the bottoms of the central column magnetic core C4, the left column magnetic core C1 and the right column magnetic core C2 are all flush with the top of the lower magnetic core C5.

The third winding N3 is configured to acquire the magnetic flux of the first winding N1 and the magnetic flux of the second winding N2 to calculate the induced voltage of the third winding N3, so that the signal processing circuit calculates the current difference between the first winding N1 and the second winding N2 according to the induced voltage.

In some embodiments, the left column magnetic core C1 and the right column magnetic core C2 have the same shape and the first winding N1 and the second winding N2 have the same number of turns.

The upper magnetic core C3, the lower magnetic core C5, the left column magnetic core C1 and the right column magnetic core C2 are all made of a first type of material, and the central column magnetic core C4 is made of a second type of material. The magnetic permeability of the first type of material is lower than that of the second type of material.

In some embodiments, the first type of material is one of iron silicon, iron silicon aluminum and iron nickel or a combination thereof. The second type of material is one of ferrite, amorphous substance and nanocrystalline or a combination thereof.

In some embodiments, the materials of the left column magnetic core C1 and the right column magnetic core C2 may also be ferrite, nanocrystalline, amorphous magnetic cores or the like opened with air gaps. It shall be noted that the magnetic permeability of the materials of the left column magnetic core C1 and the right column magnetic core C2 must be lower than that of the material of the central column magnetic core C4.

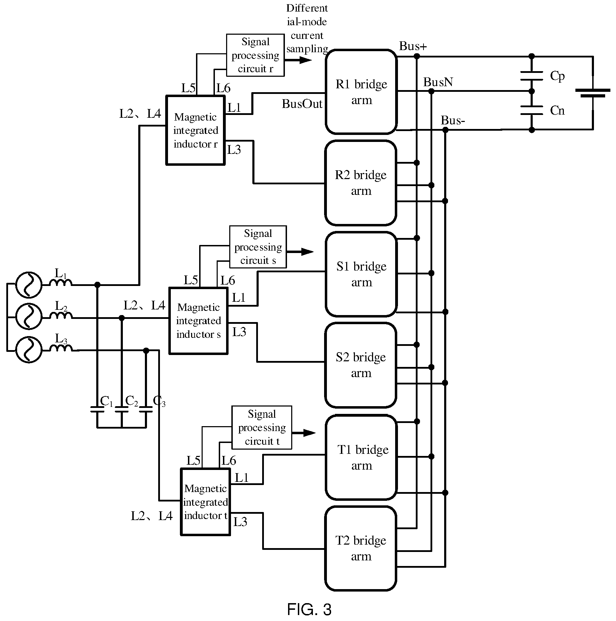

Referring to FIG. 3, there is shown a schematic structural diagram of an inverter provided according to an embodiment of the present application. As shown in FIG. 3, the inverter comprises an inverter circuit and the magnetic integrated inductor as described above, and the magnetic integrated inductor is connected with the inverter circuit.

The inverter circuit comprises a three-phase bridge arm module, a bus capacitor module and an output filter module, wherein the three-phase bridge arm module comprises three one-phase bridge arms, each of which comprises two bridge arms. The three-phase bridge arm module is connected with the bus capacitor module and the magnetic integrated inductor respectively, the magnetic integrated inductor is further connected with the output filter module, the magnetic integrated inductor is further configured to be connected with the signal processing circuit, the bus capacitor module is further connected to receive direct current, and the output filter module is further configured to output alternating current.

The magnetic integrated inductor is configured to suppress common-mode current ripple and differential-mode current ripple when the inverter converts direct current to alternating current, and measure the current difference between two bridge arms in each one-phase bridge arm among the three-phase bridge arm module.

The bus capacitor module comprises a capacitor Cp and a capacitor Cn. The three-phase bridge arm module comprises an R-phase bridge arm, an S-phase bridge arm and a T-phase bridge arm, wherein the R-phase bridge arm comprises an R1 bridge arm and an R2 bridge arm, the S-phase bridge arm comprises an S1 bridge arm and an S2 bridge arm, and the T-phase bridge arm comprises a T1 bridge arm and a T2 bridge arm. The output filter module comprises an inductor L1, an inductor L2, an inductor L3, a capacitor C1, a capacitor C2 and a capacitor C3.

The L1 terminal and the L3 terminal of each magnetic integrated inductor are respectively connected with the outputs of two bridge arms in each one-phase bridge arm. The L2 terminal and the L4 terminal of each magnetic integrated inductor are connected with each other and connected with the output filter module. The L5 and L6 terminals of each magnetic integrated inductor are respectively connected with the signal processing circuit for measuring the current difference between two bridge arms in each one-phase bridge arm.

Magnetic integrated inductors r, s and t are used to suppress common-mode current ripple and differential-mode current ripple, and are also used to measure the current difference between two bridge arms in each one-phase bridge arm.

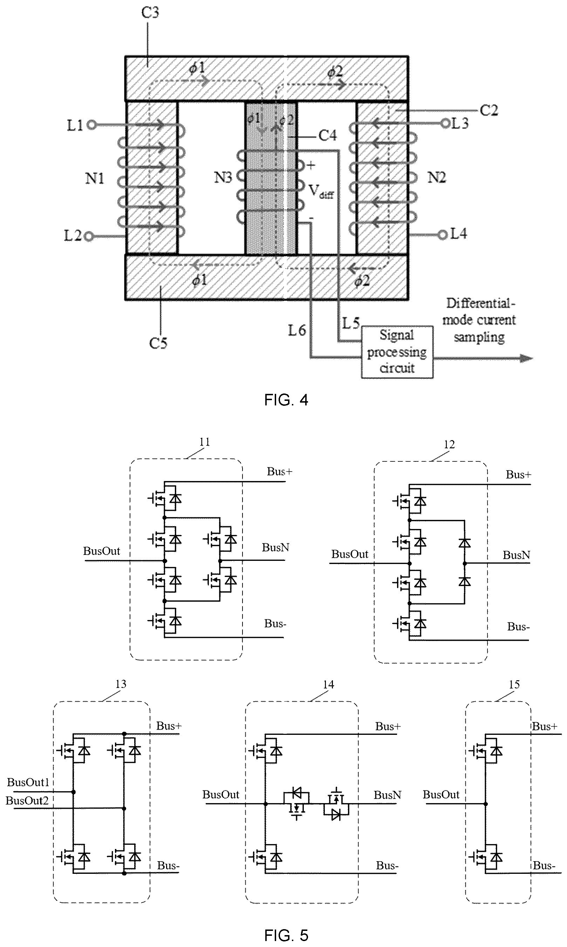

Referring to FIG. 4, there is shown a schematic structural diagram when the magnetic integrated inductor provided according to the embodiment of the present application is in operation.

When there is current in the first winding N1 and the second winding N2, the magnetic fluxes generated by the first winding N1 and the second winding N2 are as shown in FIG. 4. Because the magnetic permeability of the central column magnetic core C4 is higher than those of other magnetic cores, the central column magnetic core C4 will decouple the magnetic fluxes generated by the first winding N1 and the second winding N2, and the magnetic flux $\phi1$ generated by the first winding N1 will not flow through the second winding N2, and the magnetic flux $\phi2$ generated by the second winding N2 will not flow through the first winding N1.

When current of the same magnitude flows through the input terminal L1 of the first winding N1 and the input terminal L3 of the second winding N2, the magnetic flux $\phi1$ is equal to the magnetic flux $\phi2$, and the magnetic flux generated by the first winding N1 on the central column magnetic core C4 and the magnetic flux generated by the second winding N2 on the central column magnetic core C4 cancel each other out. At this time, the induced voltage $V_{diff}$ induced by the third winding N3 is 0.

When the current flowing through the input terminal L1 of the first winding N1 is different from the current flowing through the input terminal L3 of the second winding N2, the magnetic flux $\phi1$ is not equal to the magnetic flux $\phi2$, and the magnetic flux generated by the first winding N1 on the central column magnetic core C4 and the magnetic flux generated by the second winding N2 on the central column magnetic core C4 will not cancel each other out.

Then, the induced voltage $V_{diff}$ can be induced by the third winding N3, and the calculation formula of the induced voltage $V_{diff}$ is as follows:

$$V_{diff}=N_3\frac{d(\phi1-\phi2)}{dt} \qquad (1)$$

wherein $N_3$ is the number of turns of the third winding N3.

Further speaking, the central column magnetic flux $\phi3$ can be obtained after integral processing performed on the induced voltage $V_{diff}$ by the signal processing circuit, and the current difference between the first winding N1 and the second winding N2 can be calculated according to the central column magnetic flux $\phi3$.

The signal processing circuit may be an integrating circuit.

It shall be noted that the winding directions of the first winding N1 and the second winding N2 may be the same or opposite. However, one of the following conditions 1 and 2 needs to be met.

Condition 1: when the winding directions of the first winding N1 and the second winding N2 are the same, the current flows from the L1 terminal to the L2 terminal in the first winding N1 and the current flows from the L3 terminal to the L4 terminal in the second winding N2, or alternatively, the current flows from the L2 terminal to the L1 terminal in the first winding N1 and the current flows from the L4 terminal to the L3 terminal in the second winding N2.

Condition 2: when the winding directions of the first winding N1 and the second winding N2 are opposite, the current flows from the L1 terminal to the L2 terminal in the first winding N1 and the current flows from the L4 terminal to the L3 terminal in the second winding N2, or alternatively, the current flows from the L2 terminal to the L1 terminal in the first winding N1 and the current flows from the L3 terminal to the L4 terminal in the second winding N2.

Referring to FIG. 5, there is shown a schematic structural diagram of five kinds of structures of one bridge arm in the inverter.

In some embodiments, the first kind of structure of one bridge arm is shown as a structure 11 in FIG. 5, which is an active clamping three-level structure.

In some embodiments, the second kind of structure of one bridge arm is shown as a structure 12 in FIG. 5, which is a diode-clamped three-level structure.

In some embodiments, the third kind of structure of one bridge arm is shown as a structure 13 in FIG. 5, which is a two-level full-bridge structure.

In some embodiments, the fourth kind of structure of one bridge arm is shown as a structure 14 in FIG. 5, which is a T-shaped three-level structure.

In some embodiments, the fifth kind of structure of one bridge arm is shown as a structure 15 in FIG. 5, which is a two-level half-bridge structure.

It shall be noted that the types of bridge arms are not limited to the above five kinds of bridge arms, and other kinds of bridge arms may also be applied to the embodiment of the present application.

Any two bridge arms described above may be connected in parallel to form a one-phase bridge arm.

The magnetic integrated inductor provided according to the embodiment of the present application may be applied to any inverter with parallel bridge arms, and the number of levels for the inverter may be any level such as 2-level, 3-level and 5-level, and the number of phases for the inverter may be any number of phases such as single-phase, 2-phase and 3-phase. The magnetic integrated inductor provided according to the embodiment of the present application may also be applied to a rectifier or a power factor corrector.

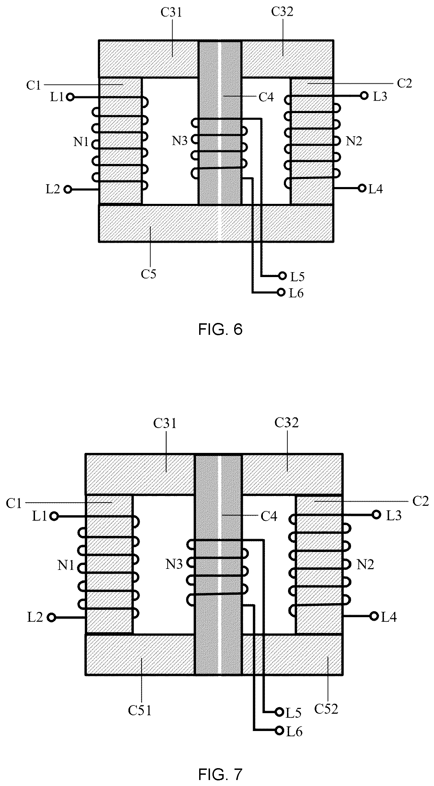

Referring to FIG. 6, there is shown a schematic structural diagram of another magnetic integrated inductor provided according to an embodiment of the present application.

In some embodiments, the upper magnetic core C3 comprises two parts, and the two parts of the upper magnetic core C3 are symmetrically arranged left and right with respect to the central column magnetic core C4. The top of the central column magnetic core C4 is flush with the top of the upper magnetic core C3, and the bottom of the central column magnetic core C4 is flush with the top of the lower magnetic core C5.

The two parts of the upper magnetic core C3 are a magnetic core C31 and a magnetic core C32 respectively. The magnetic core C31 and the magnetic core C32 are respectively arranged on the left and right sides of the central column magnetic core C4, and are flush with the top of the central column magnetic core C4.

Both the tops of the left column magnetic core C1 and the right column magnetic core C2 are flush with the bottom of the upper magnetic core C3, and both the bottoms of the left column magnetic core C1 and the right column magnetic core C2 are flush with the top of the lower magnetic core C5.

In this embodiment, the lengths of the upper magnetic core C3 and the lower magnetic core C5 are the same, the lengths of the left column magnetic core C1 and the right column magnetic core C2 are the same, and the central column magnetic core C4 is longer than the left column magnetic core C1, and the left column magnetic core C1 and the right column magnetic core C2 are arranged between the upper magnetic core C3 and the lower magnetic core C5.

Referring to FIG. 7, there is shown a schematic structural diagram of another magnetic integrated inductor provided according to an embodiment of the present application.

In some embodiments, each of the upper magnetic core C3 and the lower magnetic core C5 comprises two parts, wherein the two parts of the upper magnetic core C3 are symmetrically arranged left and right with respect to the central column magnetic core C4, and the two parts of the lower magnetic core C5 are symmetrically arranged left and right with respect to the central column magnetic core C4. The top of the central column magnetic core C4 is flush with the top of the upper magnetic core C3, and the bottom of the central column magnetic core C4 is flush with the bottom of the lower magnetic core C5.

The two parts of the upper magnetic core C3 are the magnetic core C31 and the magnetic core C32 respectively. The magnetic core C31 and the magnetic core C32 are respectively arranged on the left and right sides of the central column magnetic core C4, and are flush with the top of the central column magnetic core C4.

The two parts of the lower magnetic core C5 are a magnetic core C51 and a magnetic core C52 respectively. The magnetic core C51 and the magnetic core C52 are respectively arranged on the left and right sides of the central column magnetic core C4, and are flush with the bottom of the central column magnetic core C4.

Both the tops of the left column magnetic core C1and the right column magnetic core C2 are flush with the bottom of the upper magnetic core C3, and both the bottoms of the left column magnetic core C1 and the right column magnetic core C2 are flush with the top of the lower magnetic core C5.

In this embodiment, the lengths of the upper magnetic core C3 and the lower magnetic core C5 are the same, the lengths of the left column magnetic core C1 and the right column magnetic core C2 are the same, and the central column magnetic core C4 is longer than the left column magnetic core C1, and the left column magnetic core C1 and the right column magnetic core C2 are arranged between the upper magnetic core C3 and the lower magnetic core C5.

During the implementation of the product, the shapes of the upper magnetic core C3, the lower magnetic core C5, the central column magnetic core C4, the left column magnetic core C1 and the right column magnetic core C2 may be any of the following shapes: circle, ellipse, triangle, square, rectangle, rounded rectangle and rounded triangle.

As shall be appreciated, what shown in FIG. 2 is a cross-sectional view corresponding to the front view of the magnetic integrated inductor, while the various shapes mentioned above refer to the shapes corresponding to the respective magnetic cores when viewed from the top. For example, the upper magnetic core C3 and the lower magnetic core C5 may be plate-shaped, and the shape of the plate may be one of the above shapes.

The central column magnetic core C3, the left column magnetic core C1 and the right column magnetic core C2 may be columnar, and cross sections thereof may be of the above shapes. For example, the magnetic cores may be implemented as cylindrical, oval or prism columns, wherein the prism may be a triangular prism, a quadrangular prism, a pentagonal prism or a hexagonal prism or the like.

The upper magnetic core C3 and the lower magnetic core C5 may generally be plate-shaped, such as a rectangular parallelepiped plate or a cube plate.

The respective magnetic cores in the magnetic integrated inductor introduced in the above embodiments may be arranged independently, or some of the magnetic cores may be integrated, and when some of the magnetic cores are integrated, these magnetic cores may be integrated together to form an integral whole. For example, the upper magnetic core C3, the central column magnetic core C4, the left column magnetic core C1 and the right column magnetic core C2 are integrated together to form an integral whole, while the lower magnetic core C5 is arranged separately, and the magnetic core thus formed is in the form of EI. In addition, it is also possible that the lower magnetic core C5, the central column magnetic core C4, the left column magnetic core C1 and the right column magnetic core C2 are integrated together, while the upper magnetic core C3 is arranged separately, and the magnetic core thus formed is also in the form of EI. The shape of the magnetic cores in the magnetic integrated inductor is not limited to the form of EI, but may be other shapes, such as in the forms of EE, PQ or the like.

For the convenience of manufacturing, the integrated magnetic cores may be integrally formed at the time of manufacturing, provided that the materials of the integrally formed magnetic cores need to be the same.

In some embodiments, the first winding N1, the second winding N2 and the third winding N3 may be flat wires, enameled wires or Litz wires, and the winding materials may be aluminum wires, copper wires and the like.

In this embodiment, the number of side columns of the magnetic integrated inductor is two, the first side column consists of the left column magnetic core C1 and the first winding N1 wound on the left column magnetic core C1, and the second side column consists of the right column magnetic core C2 and the second winding N2 wound on the right column magnetic core C2.

In some embodiments, the number of side columns of the magnetic integrated inductor is not limited to 2, the number of side columns of the magnetic integrated inductor may be an integer multiple of 2, the side columns are symmetrical with respect to the central column magnetic core C4, and the magnetic permeability of the central column magnetic core C4 is higher than those of the side column magnetic cores.

The embodiment of the present application provides a magnetic integrated inductor which comprises: a first winding, a second winding, a third winding, a central column magnetic core, an upper magnetic core, a lower magnetic core, a left column magnetic core and a right column magnetic core; the upper magnetic core and the lower magnetic core being symmetrically arranged up and down; the central column magnetic core, the left column magnetic core and the right column magnetic core all being vertically arranged with respect to the upper magnetic core and the lower magnetic core; the first winding being wound on the left column magnetic core, the second winding being wound on the right column magnetic core, and the third winding being wound on the central column magnetic core; an input terminal of the first winding being connected with an inverter circuit, an input terminal of the second winding being connected with an inverter circuit, an output terminal of the first winding being connected with an output terminal of the second winding; the first winding having the same number of turns as the second winding; an input terminal and an output terminal of the third winding being respectively connected with a signal processing circuit. The magnetic integrated inductor provided according to the embodiments of the present application integrates two power windings and a current sensor into one inductor, so that differential-mode current sampling can be performed while suppressing the differential-mode current ripple and the common-mode current ripple, thereby reducing the volume of the whole circuit and reducing the cost.

Based on the magnetic integrated inductor provided in the above embodiment, the embodiment of the present application further provides an inverter, which comprises the magnetic integrated inductor introduced in the above embodiment. Specifically referring to FIG. 3, the inverter comprises an inverter circuit and a magnetic integrated inductor. The magnetic integrated inductor is connected with the inverter circuit.

In the inverter provided according to this embodiment, two inductors and two current sensors are integrated together to form a magnetic integrated inductor, which not only suppresses differential-mode current ripple and common-mode current ripple but also realizes differential-mode current sampling. The magnetic integrated inverter reduces the number of magnetic columns, thereby reducing the volume of the whole inverter and improving the power density.

**Claims**

1. An inverter circuit comprising a three-phase bridge arm module, a bus capacitor module ($C_p$, $C_n$), an output filter module ($L_1$, $L_2$, $L_3$, $C_1$, $C_2$, $C_3$), and for each phase a respective signal processing circuit and a respective magnetic integrated inductor,

said three-phase bridge arm module comprising three one-phase bridge arms, each consisting of parallelconnected first and second bridge arms (R1, R2, S1, S2, T1, T2),
the three-phase bridge arm module being connected to the bus capacitor module and each of the magnetic integrated inductors,
each of the magnetic integrated inductors being also connected to the output filter module and serving for connection with the signal processing circuit, the bus capacitor module being used for DC input, and the output filter module being used for AC output;
each of the magnetic integrated inductors being configured to suppress common-mode current ripple and differential-mode current ripple when the inverter converts DC to AC, and is adapted to measure the current difference between the first bridge arm and the second bridge arm in each one-phase bridge arm of the three-phase bridge arm module;
wherein each of the magnetic integrated inductors comprises:

a first winding (N1), a second winding (N2), a third winding (N3), a central column magnetic core (C4), an upper magnetic core (C3), a lower magnetic core (C5), a left column magnetic core (C1) and a right column magnetic core (C2);
the upper magnetic core and the lower magnetic core being symmetrically arranged up and down;
the central column magnetic core, the left column magnetic core and the right column magnetic core all being vertically arranged with respect to the upper magnetic core and the lower magnetic core;
the upper magnetic core, the lower magnetic core, the left column magnetic core and the right column magnetic core are all made of a first type of material, and the central column magnetic core is made of a second type of material; and the magnetic permeability of the first type of material is lower than that of the second type of material;
the first winding being wound on the left column magnetic core, the second winding being wound on the right column magnetic core, and the third winding being wound on the central column magnetic core;
wherein an input terminal (L1) of the first winding is connected with the output terminal of the first bridge arm, an input terminal (L3) of the second winding is connected with the output terminal of the second bridge arm, an output terminal of the first winding (L2) and an output terminal (L4) of the second winding are both connected to the output filter module; the first winding having the same number of turns as the second winding;
wherein an input terminal (L5) and an output terminal (L6) of the third winding are respectively connected with the respective signal processing circuit;
wherein, the third winding is configured to obtain the magnetic flux of the first winding and the magnetic flux of the second winding in order for the signal processing circuit to calculate the induced voltage of the third winding and to integrate it thereby obtaining the center column magnetic flux, and based on the center column magnetic flux, to calculate the current difference between the first winding and the second winding.

2. The inverter circuit according to Claim 1, wherein in each of the magnetic integrated inductors the left column magnetic core has the same shape as the right column magnetic core, and the first winding has the same number of turns as the second winding.

3. The inverter circuit according to Claim 1, wherein in each of the magnetic integrated inductors the first type of material is one of iron silicon, iron silicon aluminum and iron nickel or a combination thereof; and
the second type of material is one of ferrite, amorphous substance and nanocrystalline or a combination thereof.

4. The inverter circuit according to any of Claims 1 to 3, wherein in each of the magnetic integrated inductors the tops of the central column magnetic core, the left column magnetic core and the right column magnetic core are all flush with the bottom of the upper magnetic core, and the bottoms of the central column magnetic core, the left column magnetic core and the right column magnetic core are all flush with the top of the lower magnetic core.

5. The inverter circuit according to any of Claims 1 to 3,

wherein in each of the magnetic integrated inductors the upper magnetic core comprises two parts, and the two parts of the upper magnetic core are symmetrically arranged left and right with respect to the central column magnetic core;
the top of the central column magnetic core is flush with the top of the upper magnetic core, and the bottom of the central column magnetic core is flush with the top of the lower magnetic core;
both the tops of the left column magnetic core and the right column magnetic core are flush with the bottom of the upper magnetic core, and both the bottoms of the left column magnetic core and the right column magnetic core are flush with the top of the lower magnetic core.

6. The inverter circuit according to any of Claims 1 to 3,

wherein in each of the magnetic integrated inductors each of the upper magnetic core and the lower magnetic core comprises two parts, wherein the two parts of the upper magnetic core are symmetrically arranged left and right with respect to the central column magnetic core, and the two parts of the lower magnetic core are symmetrically arranged left and right with respect to the central column magnetic core;
the top of the central column magnetic core is flush with the top of the upper magnetic core, the bottom of the central column magnetic core is flush with the bottom of the lower magnetic core;
both the tops of the left column magnetic core and the right column magnetic core are flush with the bottom of the upper magnetic core, and both the bottoms of the left column magnetic core and the right column magnetic core are flush with the top of the lower magnetic core.

7. An inverter comprising: an inverter circuit according to any of Claims 1 to 6.

**Patentansprüche**

1. Wechselrichterschaltung, umfassend ein dreiphasiges Brückenarmmodul, ein Buskondensatormodul ($C_p$, $C_n$), ein Ausgangsfiltermodul ($L_1$, $L_2$, $L_3$, $C_1$, $C_2$, $C_3$) und für jede Phase eine jeweilige Signalverarbeitungsschaltung und einen jeweiligen magnetisch integrierten Induktor,

wobei das dreiphasige Brückenarmmodul drei einphasige Brückenarme umfasst, die jeweils aus parallel geschalteten ersten und zweiten Brückenarmen (R1, R2, S1, S2, T1, T2) bestehen,
wobei das dreiphasige Brückenarmmodul mit dem Buskondensatormodul und jedem der magnetisch integrierten Induktoren verbunden ist,
wobei jeder der magnetisch integrierten Induktoren auch mit dem Ausgangsfiltermodul verbunden ist und zur Verbindung mit der Signalverarbeitungsschaltung dient, wobei das Buskondensatormodul für den Gleichstrom-Eingang verwendet wird und das Ausgangsfiltermodul für den Wechselstrom-Ausgang verwendet wird;
wobei jeder der magnetisch integrierten Induktoren so ausgebildet ist, dass er Gleichtakt-Stromwelligkeit und Differenztakt-Stromwelligkeit unterdrückt, wenn der Wechselrichter Gleichstrom in Wechselstrom umwandelt, und geeignet ist, um die Stromdifferenz zwischen dem ersten Brückenarm und dem zweiten Brückenarm in jedem einphasigen Brückenarm des dreiphasigen Brückenarmmoduls zu messen;
wobei jeder der magnetisch integrierten Induktoren Folgendes umfasst:

eine erste Wicklung (N1), eine zweite Wicklung (N2), eine dritte Wicklung (N3), einen mittleren Säulenmagnetkern (C4), einen oberen Magnetkern (C3), einen unteren Magnetkern (C5), einen linken Säulenmagnetkern (C1) und einen rechten Säulenmagnetkern (C2);
wobei der obere Magnetkern und der untere Magnetkern symmetrisch nach oben und unten angeordnet sind;

wobei der mittlere Säulenmagnetkern, der linke Säulenmagnetkern und der rechte Säulenmagnetkern alle vertikal in Bezug auf den oberen Magnetkern und den unteren Magnetkern angeordnet sind; der obere Magnetkern, der untere Magnetkern, der linke Säulenmagnetkern und der rechte Säulenmagnetkern alle aus einem ersten Materialtyp bestehen, und der mittlere Säulenmagnetkern aus einem zweiten Materialtyp besteht; und die magnetische Durchlässigkeit des ersten Materialtyps geringer ist als die des zweiten Materialtyps; wobei die erste Wicklung auf den linken Säulenmagnetkern gewickelt ist, die zweite Wicklung auf den rechten Säulenmagnetkern gewickelt ist und die dritte Wicklung auf den mittleren Säulenmagnetkern gewickelt ist; wobei eine Eingangsklemme (L1) der ersten Wicklung mit der Ausgangsklemme des ersten Brückenarms verbunden ist, eine Eingangsklemme (L3) der zweiten Wicklung mit der Ausgangsklemme des zweiten Brückenarms verbunden ist, eine Ausgangsklemme der ersten Wicklung (L2) und eine Ausgangsklemme (L4) der zweiten Wicklung beide mit dem Ausgangsfiltermodul verbunden sind; wobei die erste Wicklung die gleiche Anzahl von Windungen hat wie die zweite Wicklung; wobei eine Eingangsklemme (L5) und eine Ausgangsklemme (L6) der dritten Wicklung jeweils mit der jeweiligen Signalverarbeitungsschaltung verbunden sind; wobei die dritte Wicklung so ausgebildet ist, dass sie den magnetischen Fluss der ersten Wicklung und den magnetischen Fluss der zweiten Wicklung erhält, damit die Signalverarbeitungsschaltung die induzierte Spannung der dritten Wicklung berechnen und sie dadurch integrieren kann, um den magnetischen Fluss der mittleren Säule zu erhalten, und auf Grundlage des magnetischen Flusses der mittleren Säule die Stromdifferenz zwischen der ersten Wicklung und der zweiten Wicklung berechnen kann.

2. Wechselrichterschaltung nach Anspruch 1, wobei in jedem der magnetisch integrierten Induktoren der linke Säulenmagnetkern die gleiche Form wie der rechte Säulenmagnetkern aufweist, und die erste Wicklung die gleiche Anzahl von Umdrehungen aufweist wie die zweite Wicklung.

3. Wechselrichterschaltung nach Anspruch 1, wobei in jedem der magnetisch integrierten Induktoren der erste Materialtyp einer aus Eisensilizium, Eisensiliziumaluminium und Eisennickel oder einer Kombination davon ist; und der zweite Materialtyp einer aus Ferrit, amorpher Substanz und Nanokristallin oder einer Kombination davon ist.

4. Wechselrichterschaltung nach einem der Ansprüche 1 bis 3, wobei in jedem der magnetisch integrierten Induktoren die Oberseiten des mittleren Säulenmagnetkerns, des linken Säulenmagnetkerns und des rechten Säulenmagnetkerns alle bündig mit der Unterseite des oberen Magnetkerns sind und die Unterseiten des mittleren Säulenmagnetkerns, des linken Säulenmagnetkerns und des rechten Säulenmagnetkerns alle bündig mit der Oberseite des unteren Magnetkerns sind.

5. Wechselrichterschaltung nach einem der Ansprüche 1 bis 3, wobei in jedem der magnetisch integrierten Induktoren der obere Magnetkern zwei Teile umfasst und die beiden Teile des oberen Magnetkerns links und rechts gegenüber dem mittleren Säulenmagnetkern symmetrisch angeordnet sind;

die Oberseite des mittleren Säulenmagnetkerns bündig mit der Oberseite des oberen Magnetkerns ist und die Unterseite des mittleren Säulenmagnetkerns bündig mit der Oberseite des unteren Magnetkerns ist; sowohl die Oberseiten des linken Säulenmagnetkerns als auch des rechten Säulenmagnetkerns bündig mit der Unterseite des oberen Magnetkerns sind, und beide Unterseiten des linken Säulenmagnetkerns und des rechten Säulenmagnetkerns bündig mit der Oberseite des unteren Magnetkerns sind.

6. Wechselrichterschaltung nach einem der Ansprüche 1 bis 3, wobei in jedem der magnetisch integrierten Induktoren jeweils der obere Magnetkern und der untere Magnetkern zwei Teile umfasst, wobei die beiden Teile des oberen Magnetkerns links und rechts in Bezug auf den mittleren Säulenmagnetkern symmetrisch angeordnet sind, und die beiden Teile des unteren Magnetkerns links und rechts in Bezug auf den mittleren Säulenmagnetkern symmetrisch angeordnet sind;

die Oberseite des Magnetkerns der mittleren Säule bündig mit der Oberseite des oberen Magnetkerns ist, die Unterseite des Magnetkerns der mittleren Säule bündig mit der Unterseite des unteren Magnetkerns ist; sowohl die Oberseiten des linken Säulenmagnetkerns als auch des rechten Säulenmagnetkerns bündig mit der Unterseite des oberen Magnetkerns sind, und beide Unterseiten des linken Säulenmagnetkerns und des rechten Säulenmagnetkerns bündig mit der Oberseite des unteren Magnetkerns sind.

7. Wechselrichter umfassend:
   eine Wechselrichterschaltung nach einem der Ansprüche 1 bis 6

**Revendications**

1. Circuit inverseur comportant un module bras de pont triphasé, un module condensateur de bus ($C_p$, $C_n$), un module filtre de sortie ($L_1$, $L_2$, $L_3$, $C_1$, $C_2$, $C_3$), et pour chaque phase un circuit de traitement de signal respectif et un inducteur magnétique intégré respectif,

   ledit module bras de pont triphasé comportant trois bras de pont monophasés, chacun consistant en des premier et deuxième bras de pont (R1, R2, S1, S2, T1, T2) connectés en parallèle, le module bras de pont triphasé étant connecté au module condensateur de bus et à chacun des inducteurs magnétiques intégrés,
   chacun des inducteurs magnétiques intégrés étant également connecté au module filtre de sortie et servant à la connexion avec le circuit de traitement de signal, le module condensateur de bus étant utilisé pour l'entrée CC, et le module filtre de sortie étant utilisé pour la sortie CA ;
   chacun des inducteurs magnétiques intégrés étant configuré pour supprimer l'ondulation de courant en mode commun et l'ondulation de courant en mode différentiel lorsque l'inverseur convertit du CC en CA, et est conçu pour mesurer la différence de courant entre le premier bras de pont et le deuxième bras de pont dans chaque bras de pont monophasé du module bras de pont triphasé ;
   dans lequel chacun des inducteurs magnétiques intégrés comporte :

   un premier enroulement (N1), un deuxième enroulement (N2), un troisième enroulement (N3), un noyau magnétique de colonne centrale (C4), un noyau magnétique supérieur (C3), un noyau magnétique inférieur (C5), un noyau magnétique de colonne gauche (C1) et un noyau magnétique de colonne droite (C2) ;
   le noyau magnétique supérieur et le noyau magnétique inférieur étant agencés symétriquement en haut et en bas ;
   le noyau magnétique de colonne centrale, le noyau magnétique de colonne gauche et le noyau magnétique de colonne droite étant tous agencés verticalement par rapport au noyau magnétique supérieur et au noyau magnétique inférieur ;
   le noyau magnétique supérieur, le noyau magnétique inférieur, le noyau magnétique de colonne gauche et le noyau magnétique de colonne droite sont tous en un premier type de matériau, et le noyau magnétique de colonne centrale est en un deuxième type de matériau ; et la perméabilité magnétique du premier type de matériau est inférieure à celle du deuxième type de matériau ;
   le premier enroulement étant enroulé sur le noyau magnétique de colonne gauche, le deuxième enroulement étant enroulé sur le noyau magnétique de colonne droite, et le troisième enroulement étant enroulé sur le noyau magnétique de colonne centrale ;
   dans lequel une borne d'entrée (L1) du premier enroulement est connectée à la borne de sortie du premier bras de pont, une borne d'entrée (L3) du deuxième enroulement est connectée à la borne de sortie du deuxième bras de pont, une borne de sortie du premier enroulement (L2) et une borne de sortie (L4) du deuxième enroulement sont toutes deux connectées au module filtre de sortie ; le premier enroulement présentant le même nombre de spires que le deuxième enroulement ;
   dans lequel une borne d'entrée (L5) et une borne de sortie (L6) du troisième enroulement sont respectivement connectées au circuit de traitement de signal respectif ;
   dans lequel le troisième enroulement est configuré pour obtenir le flux magnétique du premier enroulement et le flux magnétique du deuxième enroulement afin que le circuit de traitement de signal calcule la tension induite du troisième enroulement et l'intègre pour ainsi obtenir le flux magnétique de colonne centrale, et sur la base du flux magnétique de colonne centrale, pour calculer la différence de courant entre le premier enroulement et le deuxième enroulement.

2. Circuit inverseur selon la revendication 1, dans lequel, dans chacun des inducteurs magnétiques intégrés, le noyau magnétique de colonne gauche a la même forme que le noyau magnétique de colonne droite, et le premier enroulement présente le même nombre de spires que le deuxième enroulement.

3. Circuit inverseur selon la revendication 1, dans lequel, dans chacun des inducteurs magnétiques intégrés, le premier type de matériau est l'un parmi le fer-silicium, le fer-silicium-aluminium et le fer-nickel ou une combinaison de ceux-ci ; et
le deuxième type de matériau est l'un parmi la ferrite, une substance amorphe et un matériau nanocristallin ou une combinaison de ceux-ci.

4. Circuit inverseur selon l'une quelconque des revendications 1 à 3, dans lequel, dans chacun des inducteurs magnétiques intégrés, les parties supérieures du noyau magnétique de colonne centrale, du noyau magnétique de colonne gauche et du noyau magnétique de colonne droite sont toutes au même niveau que la partie inférieure du noyau magnétique supérieur, et les parties inférieures du noyau magnétique de colonne centrale, du noyau magnétique de colonne gauche et du noyau magnétique de colonne droite sont toutes au même niveau que la partie supérieure du noyau magnétique inférieur.

5. Circuit inverseur selon l'une quelconque des revendications 1 à 3, dans lequel, dans chacun des inducteurs magnétiques intégrés, le noyau magnétique supérieur comporte deux parties, et les deux parties du noyau magnétique supérieur sont agencées symétriquement à gauche et à droite par rapport au noyau magnétique de colonne centrale ;

la partie supérieure du noyau magnétique de colonne centrale est au même niveau que la partie supérieure du noyau magnétique supérieur, et la partie inférieure du noyau magnétique de colonne centrale est au même niveau que la partie supérieure du noyau magnétique inférieur ;
les deux parties supérieures du noyau magnétique de colonne gauche et du noyau magnétique de colonne droite sont au même niveau que la partie inférieure du noyau magnétique supérieur, et les deux parties inférieures du noyau magnétique de colonne gauche et du noyau magnétique de colonne droite sont au même niveau que la partie supérieure du noyau magnétique inférieur.

6. Circuit inverseur selon l'une quelconque des revendications 1 à 3, dans lequel, dans chacun des inducteurs magnétiques intégrés, chacun du noyau magnétique supérieur et du noyau magnétique inférieur comporte deux parties, dans lequel les deux parties du noyau magnétique supérieur sont agencées symétriquement à gauche et à droite par rapport au noyau magnétique de colonne centrale, et les deux parties du noyau magnétique inférieur sont agencées symétriquement à gauche et à droite par rapport au noyau magnétique de colonne centrale ;

la partie supérieure du noyau magnétique de colonne centrale est au même niveau que la partie supérieure du noyau magnétique supérieur, la partie inférieure du noyau magnétique de colonne centrale est au même niveau que la partie inférieure du noyau magnétique inférieur ;
les deux parties supérieures du noyau magnétique de colonne gauche et du noyau magnétique de colonne droite sont au même niveau que la partie inférieure du noyau magnétique supérieur, et les deux parties inférieures du noyau magnétique de colonne gauche et du noyau magnétique de colonne droite sont au même niveau que la partie supérieure du noyau magnétique inférieur.

7. Inverseur comportant :
un circuit inverseur selon l'une quelconque des revendications 1 à 6

FIG. 1

FIG. 2

FIG. 3

FIG. 4

FIG. 5

FIG. 6

FIG. 7

REFERENCES CITED IN THE DESCRIPTION

**Patent documents cited in the description**

- US 2008080106 A
- CN 107196547
- CN 204188695 U
- CN 105024571